# EUROPEAN PATENT APPLICATION

(11) **EP 3 385 027 A1**
(43) Date of publication of application: **10.10.2018**
(21) Application number: 18168385.5
(22) Date of filing: 29.10.2014
(51) Int. Cl.: B23K 35/26, B23K 35/02, C22C 13/00, C22C 13/02

(54) **LEAD-FREE, SILVER-FREE SOLDER ALLOYS**

(30) Priority: 31.10.2013 US 201361898202 P
(62) Divisional of application: 14856974.2
(71) Applicant: Alpha Metals, Inc., South Plainfield, NJ 07080 (US)
(72) Inventor: MURPHY, Michael, Bridgewater, NJ New Jersey 08807 (US); PANDHER, Ranjit, S., Plainsboro, NJ New Jersey 08536 (US)
(74) Representative: Jenkins, Peter David

(57) **Abstract**

A lead-free, silver-free solder alloy includes 0.001 to 0.800 % by weight copper, 0.080 to 0.120 % by weight bismuth, 0.030 to 0.050 % by weight nickel, 0.008 to 0.012 % by weight phosphorus, and balance tin, together with unavoidable impurities. The solder alloy can be in the form of one of a bar, a stick, a solid or flux cored wire, a foil or strip, or a powder or paste, or solder spheres for use in ball grid arrays or chip scale packages, or other pre-formed solder pieces. The solder alloy can be used to create a solder joint between an electronic component and a pad of an electronic substrate.

## Description

### BACKGROUND OF THE DISCLOSURE

The present disclosure is directed to methods of joining electrical or mechanical components, and more particularly to methods of attaching electronic components and associated devices onto circuit boards and other electronic substrates.

Electronic assemblers were required to adopt lead-free solder alloys in 2006. One example of an existing lead-free solder alloy can be found in U.S. Patent Application Publication No. 2008/0292492 A1, which is incorporated herein by reference in its entirety for all purposes. However, the solder alloy disclosed in this reference contains silver. The most popular lead-free alloys contain up to 4 % by weight silver. The market price of silver has increased steadily in the last several years resulting in substantial increases in solder costs for many electronics assemblers. Many studies have been performed on the acceptability of low silver (less than 1 % by weight) and silver-free alloys for certain types of electronic assemblies. Additionally, many assemblers have successfully been using silver-free alloys for several years thereby gaining acceptance within the industry. As a result of the high cost of silver bearing alloys and the industry's growing experience with using silver-free alloys there is a growing demand for these types of alloys in the market.

### SUMMARY OF THE DISCLOSURE

One aspect of the present disclosure is directed to a lead-free, silver-free solder alloy comprising 0.001 to 0.800 % by weight copper, 0.080 to 0.120 % by weight bismuth, 0.030 to 0.050 % by weight nickel, 0.008 to 0.012 % by weight phosphorus, and balance tin, together with unavoidable impurities. Embodiments of the solder alloy further may comprise one or more of the following: 0.10 % by weight maximum silver; 0.05 % by weight maximum lead; 0.05 % by weight maximum antimony; 0.030 % by weight maximum arsenic; 0.001 % by weight maximum cadmium; 0.001 % maximum zinc; 0.020 % by weight maximum iron; 0.001 % by weight maximum aluminum; 0.050 % by weight maximum indium; 0.050 % by weight maximum gold; 0.10 % by weight maximum chromium; and 0.10 % by weight maximum mercury. In another embodiment, copper is 0.600 to 0.800 % by weight of the solder alloy.

The solder alloy may be in the form of one of a bar, a stick, a solid or flux cored wire, a foil or strip, or a powder or paste, or solder spheres for use in ball grid arrays or chip scale packages, or other pre-formed solder pieces.

The solder alloy may be used to fabricate a solder joint. A method of forming a solder joint is also disclosed.

Another aspect of the present disclosure is directed to a lead-free, silver-free solder alloy consisting of 0.001 to 0.800 % by weight copper, 0.001 to 0.050 % by weight nickel, 0.001 to 0.012 % by weight phosphorus, 0.001 to 0.008 % by weight gallium, and balance tin, together with unavoidable impurities. In one embodiment, copper is 0.600 to 0.800 % by weight of the solder alloy.

### DETAILED DESCRIPTION OF THE PREFERRED EMBODIMENTS

There are a number of requirements for a solder alloy to be suitable for use in wave soldering, reflow soldering, hot air levelling processes, ball grid arrays, and other assembly processes. For example, the alloy must exhibit good wetting characteristics in relation to a variety of substrate materials such as copper, nickel, nickel phosphorus ("electroless nickel"). Such substrates may be coated to improve wetting, for example by using tin alloys, gold or organic coatings (OSP). Good wetting also enhances the ability of the molten solder to flow into a capillary gap, and to climb up the walls of a through-plated hole in a printed wiring board, to thereby achieve good through hole filling.

Solder alloys tend to dissolve the substrate and to form an intermetallic compound at the interface with the substrate. For example, tin in the solder alloy may react with the substrate at the interface to form an inter metallic compound layer. If the substrate is copper, then a layer of Cu₆Sn₅ will be formed. Such a layer typically has a thickness of from a fraction of a micron to a few microns. At the interface between this layer and the copper substrate an intermetallic compound of CusSn may be present. The interface intermetallic layers will tend to grow during aging, particularly where the service is at higher temperatures, and the thicker intermetallic layers, together with any voids that may have developed may further contribute to premature fracture of a stressed joint.

Other factors are: (i) the presence of intermetallics in the alloy itself, which results in improved mechanical properties; (ii) oxidation resistance, which is important in solder spheres where deterioration during storage or during repeated reflows may cause the soldering performance to become less than ideal; (iii) drossing rate; and (iv) alloy stability. These latter considerations may be important for applications where the alloy is held in a tank or bath for long periods of time.

As mentioned above, many lead-free solder alloys include silver, which provides added expense to the solder alloy. The present disclosure aims to address at least some of the problems associated with the prior art and to provide an improved solder alloy that reduces or eliminates silver. Accordingly, the present disclosure provides an alloy suitable for use in a wave solder process, a reflow soldering process, hot air levelling process, a ball grid array or chip scale package, the alloy comprising 0.001 to 0.800 % by weight copper, 0.080 to 0.120 % by weight bismuth, 0.030 to 0.050 % by weight nickel, 0.008 to 0.012 % by weight phosphorus, and balance tin. As shown in the table provided for EXAMPLE 1 below, the solder alloy may further include trace amounts of silver (0.10 % by weight maximum), lead (0.05 % by weight maximum), antimony (0.05 % by weight maximum), arsenic (0.030 % by weight maximum), cadmium (0.001 % by weight maximum), zinc (0.001 % maximum), iron (0.020 % by weight maximum), aluminum (0.001 % by weight maximum), indium (0.050 % by weight maximum), gold (0.050 % by weight maximum), chromium (0.10 % by weight maximum), and mercury (0.10 % by weight maximum).

The solder alloy preferably comprises from 0.001 to 0.800 % by weight copper. Copper forms an eutectic with tin, lowering the melting point and increasing the alloy strength. A copper content in the hyper-eutectic range increases the liquidus temperature but further enhances the alloy strength. Copper further lowers the melting point and improves the wetting properties of the solder to copper and other substrates.

The solder alloy preferably comprises 0.080 to 0.120 % by weight bismuth. The presence of bismuth provides strengthening of the alloy via its presence in solid solution at low concentration levels, and as bismuth rich particles or bismuth containing inter-metallics at higher levels. Bismuth reduces the melting point and improves the mechanical properties of the solder alloy for the applications in question, i.e., wave soldering, reflow soldering, hot air levelling, ball grid arrays, and chip scale packages. The bismuth content also contributes to the reduction in the growth rate of copper-tin inter-metallics at the interface which leads to improved mechanical properties of the solder joints made using the alloys. For this reason, the alloy according to the present disclosure preferably comprises from 0.080 to 0.120 % by weight bismuth.

Nickel may act as an inter-metallic compound growth modifier and a grain refiner. For example, while not wishing to be bound by theory, it is believed that nickel forms an inter-metallic with tin and substitutes for the copper to form a CuNiSn inter-metallic. Nickel may also form an inter-metallic with bismuth. The presence of nickel in the alloy has been found to have an advantageous effect in that it reduces the dissolution rate of the thin copper layers on printed circuit boards. In some cases, where there are large areas of bare copper being wetted by the solder, this attribute is helpful to maintain the stability of the solder composition and prevent undue build-up of the copper level. This has particular value in, for example, hot air solder levelling since the potential for problems being caused by the change in the solder bath composition (for example an increase in the copper level) are reduced. For these reasons, the alloy according to the present disclosure preferably comprises at least 0.030 % by weight nickel, for example from 0.030 to 0.050 % by weight nickel.

Phosphorus may act to reduce the volume of dross formed on the top of an open tank of solder, and is thus a valuable addition in, for example, wave solder baths. In some embodiments, germanium (Ge) may be substituted for phosphorus. In one embodiment, the solder alloy includes 0.008 to 0.012 % by weight phosphorus.

The alloy will typically comprise at least 90 % by weight tin, preferably from 94 to 99.6 % by weight tin, more preferably from 95 to 99 % by weight tin, still more preferably 97 to 99 % by weight tin. Accordingly, the present disclosure further provides an alloy for use in a wave solder process, reflow soldering process, hot air levelling process, a ball grid array or chip scale package. In one embodiment, the solder alloy is particular suited for a wave solder process.

In another embodiment, the solder alloy comprises 0.001 to 0.800 % by weight copper, 0.001 to 0.050 % by weight nickel, 0.001 to 0.012 % by weight phosphorus, 0.001 to 0.008 % by weight gallium, and balance tin. As previously noted in the prior embodiment, the solder alloy may further include trace amounts of silver (0.10 % by weight maximum), lead (0.07 % by weight maximum), antimony (0.10 % by weight maximum), arsenic (0.030 % by weight maximum), cadmium (0.002 % by weight maximum), zinc (0.001 % maximum), iron (0.020 % by weight maximum), aluminum (0.001 % by weight maximum), indium (0.050 % by weight maximum), and gold (0.050 % by weight maximum).

The solder alloy preferably comprises from 0.001 to 0.800 % by weight copper. As mentioned above, copper forms an eutectic with tin, lowering the melting point and increasing the alloy strength. Copper further lowers the melting point and improves the wetting properties of the solder to copper and other substrates.

The solder alloy preferably comprises phosphorus, which acts to reduce the volume of dross formed on the top of an open tank of solder, and is thus a valuable addition in, for example, wave solder baths. In some embodiments, germanium (Ge) may be substituted for phosphorus. In one embodiment, the solder alloy includes 0.001 to 0.002 % by weight phosphorus.

The solder alloy further includes gallium, which can be included to improve the overall look of a solder joint resulting from application of the solder alloy. Gallium has a relatively low melting point, e.g., approximately 30 °C, and its radius is slightly smaller than that of copper. When creating a solder joint, the speed of spread of wettability of the solder alloy become faster and the strength of joint improves. In addition, gallium reduces an amount of oxidization when wave soldering with the solder alloy. In one embodiment, the solder alloy includes 0.001 to 008 % by weight gallium, and more preferably 0.005 to 0.008 % by weight gallium.

The alloy will typically comprise at least 90 % by weight tin, preferably from 94 to 99.6 % by weight tin, more preferably from 95 to 99 % by weight tin, still more preferably 97 to 99 % by weight tin. Accordingly, the present disclosure further provides an alloy for use in a wave solder process, reflow soldering process, hot air levelling process, a ball grid array or chip scale package.

The alloys according to the present disclosure may consist essentially of the recited elements. It will therefore be appreciated that in addition to those elements which are mandatory (i.e., tin, copper, bismuth, nickel, and phosphorus), other non-specified elements may be present in the composition provided that the essential characteristics of the composition are not materially affected by their presence. Accordingly, the present disclosure still further provides an alloy for use in a wave solder process, reflow soldering process, hot air levelling process, a ball grid array, chip scale package or other processes used for electronics assembly.

The present disclosure also provides for the use of the solder alloy composition in a ball grid array or chip scale package.

The present disclosure also provides for a ball grid array joint comprising the above solder alloy composition.

The alloys according to the present disclosure are lead-free or essentially lead-free. The alloys offer environmental advantages over conventional lead-containing solder alloys.

The alloys according to the present disclosure will typically be supplied as a bar, stick or ingot, optionally together with a flux. The alloys may also be provided in the form of a wire, for example a cored wire, which incorporates a flux, a sphere, or other pre-form typically though not necessarily made by cutting or stamping from a strip of solder. These may be alloy only or coated with a suitable flux as required by the soldering process. The alloys may also be supplied as a powder, or as a powder blended with a flux to produce a solder paste.

The alloys according to the present disclosure may be used in molten solder baths as a means to solder together two or more substrates and/or for coating a substrate.

The alloys according to the present disclosure can be used to attach both mechanically and electrically electronic components onto pads of a printed circuit board.

It will be appreciated that the alloys according to the present disclosure may contain unavoidable impurities, although, in total, these are unlikely to exceed 1 % by weight of the composition. Preferably, the alloys contain unavoidable impurities in an amount of not more than 0.5 wt. % by weight of the composition, more preferably not more than 0.3 % by weight of the composition, still more preferably not more than 0.1 % by weight of the composition.

The alloys according to the present disclosure are particularly well suited to applications involving wave soldering, reflow soldering, hot air levelling or ball grid arrays and chip scale packaging. The alloys according to the present disclosure may also find application in non-electronic applications such as, for example, plumbing and automotive radiators.

These solder alloys have been shown to provide acceptable soldering performance and reliability in lab testing and in various field trials. The solder alloy can be sold in a variety of forms including, but not limited to, particles, powder, preforms, paste, solid wire, cored wire, and solid bars, pellets or ingots. The solder alloy can be used in a variety of electronics assembly soldering processes including, but not limited to: reflow, wave soldering, plating, hand soldering, etc.

In one embodiment, the solder alloy has the following alloy properties:

| | |
|---|---|
| liquidus temperature (°C) | 229; |
| solidus temperature (°C) | 227; |
| CTE 30-100 °C (µm/m°C) | 23.8; |
| CTE 100-180 °C (µm/m°C) | 24.3; |
| density (g/cm³) | 7.3; |
| impact energy (Joules) | 51.2; and |
| hardness (HV 0.2) | 9.4. |

In one embodiment, the solder alloy has the following mechanical properties as cast:

| | |
|---|---|
| tensile strength (MPa) | 42.0 |
| tensile strength (MPa) | 7.6 |
| yield stress (MPa) | 33.4 |
| elongation (%) | 33.1 |

It should be observed that the lead-free, silver-free solder alloys of embodiments of the present disclosure are suitable for use as a replacement for lead-based solders, tin-silver-copper ("SAC") solder alloys, and other low-silver SAC alloys in wave solder, selective soldering, lead tinning and rework processes. The solder alloys have been designed to minimize copper dissolution as compared to silver-bearing alloys and also to improve total cost of ownership. A variant of the solder alloys may be used as a replenishment alloy in solder baths with elevated copper levels.

The solder alloys may be employed to improve performance characteristics, such as reliability, yield, copper erosion, dross generation, and solder fillet surface. As a result, the solder alloys may achieve performance benefits, such as lowering total cost of ownership due to lower material costs, higher yields, and low dross generation, excellent mechanical reliability, improved solderability due to fast wetting speed, reduced erosion of copper plating during rework which improving assembly reliability, friendlier and less aggressive to solder pot material as compared to silver-bearing alloys, and good performance across different soldering processes. Processes incorporating the solder alloys of the present disclosure improve the removal of oxides from solder, which can reduce defects, such as solder bridging.

In some embodiments, in addition to the applications described herein, the solder alloys may be used in other bonding applications including wire bonding, ribbon bonding, hermetic sealing, lid sealing, metal to metal bonding, metal to glass bonding, general bonding and bonding to various polymeric materials.

In other embodiments, the solder alloys disclosed herein may find applicability in a variety of industries including electronics, consumer electronics, telecommunications, hybrid electric vehicles, wind and solar power generation including photovoltaic cells, transportation, and industrial applications.

The function and advantage of these and other embodiments of the materials and methods disclosed herein will be more fully understood from the examples below. The following examples are intended to illustrate the benefits of the disclosed materials and methods, but do not exemplify the full scope thereof.

### EXAMPLE 1

In one embodiment, a lead-free, silver-free solder alloy includes the following components:

| **Element** | **Specification** |
|---|---|
| Tin (Sn) | balance |
| Copper (Cu) | 0.70 +/- 0.10 % |
| Bismuth (Bi) | 0.10 +/- 0.02 % |
| Nickel (Ni) | 0.04 +/- 0.01 % |
| Phosphorus (P) | 0.008 - 0.012 % |
| Silver (Ag) | 0.10 % maximum |
| Lead (Pb) | 0.05 % maximum |
| Antimony (Sb) | 0.050 % maximum |
| Arsenic (As) | 0.030 % maximum |
| Cadmium (Cd) | 0.001 % maximum |
| Zinc (Zn) | 0.001 % maximum |
| Iron (Fe) | 0.020 % maximum |
| Aluminum (Al) | 0.001 % maximum |
| Indium (In) | 0.050 % maximum |
| Gold (Au) | 0.050 % maximum |
| Chromium (Cr) | 0.10 % maximum |
| Mercury (Hg) | 0.10 % maximum |

As shown, the constituent parts of the solder alloy are copper (0.60 to 0.80 % by weight), bismuth (0.08 to 0.12 % by weight), nickel (0.3 to 0.5 % by weight), and balance tin. The solder alloy may also include phosphorus (0.008 to 0.012 % by weight).

### EXAMPLE 2

In another embodiment, a lead-free, silver-free solder alloy was tested to include the following constituent parts:

| **Element** | **Specification** |
|---|---|
| Tin (Sn) | balance |
| Copper (Cu) | 0.743 % |
| Bismuth (Bi) | 0.0881 % |
| Nickel (Ni) | 0.0384 % |
| Phosphorus (P) | 0.0110 % |
| Silver (Ag) | < 0.0001 % |
| Lead (Pb) | 0.0320 % |
| Antimony (Sb) | 0.0110 % |
| Arsenic (As) | 0.0156 % |
| Cadmium (Cd) | 0.0003 % |
| Zinc (Zn) | 0.0010 % |
| Iron (Fe) | 0.0040 % |
| Aluminum (Al) | 0.0006 % |
| Indium (In) | 0.0023 % |
| Gold (Au) | 0.0002 % |

As shown, the constituent parts of the solder alloy are copper (0.743 % by weight), bismuth (0.0881 % by weight), nickel (0.0384 % by weight), and balance tin. The solder alloy also includes phosphorus in an amount of 0.0110 % by weight.

Embodiments of the solder alloy of this example are particularly useful for an initial filling of a solder bath. In this example, the solder alloy includes copper in an amount of 0.743 % by weight.

### EXAMPLE 3

In another embodiment, a lead-free, silver-free solder alloy was tested to include the following constituent parts:

| **Element** | **Specification** |
|---|---|
| Tin (Sn) | balance |
| Copper (Cu) | 0.0267 % |
| Bismuth (Bi) | 0.119 % |
| Nickel (Ni) | 0.0379 % |
| Phosphorus (P) | 0.0092 % |
| Silver (Ag) | 0.00083 % |
| Lead (Pb) | 0.0329 % |
| Antimony (Sb) | 0.0126 % |
| Arsenic (As) | 0.0112 % |
| Cadmium (Cd) | 0.00015 % |
| Zinc (Zn) | 0.00057 % |
| Iron (Fe) | 0.00429 % |
| Aluminum (Al) | < 0.00005 % |
| Indium (In) | 0.0019 % |
| Gold (Au) | 0.00012 % |
| Anti-Oxidant | 0.0092 % |

As shown, the constituent parts of the solder alloy are copper (0.0267 % by weight), bismuth (0.119 % by weight), nickel (0.0379 % by weight), and balance tin. The solder alloy also includes phosphorus in an amount of 0.0092 % by weight.

Embodiments of the solder alloy of this example are particularly useful for replenishing a solder bath that has been subjected to copper erosion or dissolution. The solder alloy includes copper in an amount of 0.0267 % by weight. With this example, copper is not added to the solder alloy.

### EXAMPLE 4

In another embodiment, a lead-free, silver-free solder alloy includes the following components:

| **Element** | **Specification** |
|---|---|
| Tin (Sn) | balance |
| Copper (Cu) | 0.70 +/- 0.10 % |
| Nickel (Ni) | 0.04 +/- 0.01 % |
| Phosphorus (P) | 0.002 - 0.004 % |
| Gallium (Ga) | 0.005 - 0.008 % |
| Silver (Ag) | 0.10 % maximum |
| Bismuth (Bi) | 0.10 % maximum |
| Lead (Pb) | 0.05 % maximum |
| Antimony (Sb) | 0.050 % maximum |
| Arsenic (As) | 0.030 % maximum |
| Cadmium (Cd) | 0.001 % maximum |
| Zinc (Zn) | 0.001% maximum |
| Iron (Fe) | 0.020 % maximum |
| Aluminum (Al) | 0.001 % maximum |
| Indium (In) | 0.050 % maximum |
| Gold (Au) | 0.050 % maximum |
| Chromium (Cr) | 0.10 % maximum |
| Mercury (Hg) | 0.10 % maximum |

As shown, the constituent parts of the solder alloy are copper (0.60 to 0.80 % by weight), nickel (0.3 to 0.5 % by weight), gallium (0.005 to 0.008 % by weight) and balance tin. The solder alloy may also include phosphorus (0.002 to 0.04 % by weight).

This alloy composition is suitable for high temperature applications, especially if the operating temperature is more than 360 °C. It is applicable in soldering processes, such as hot air leveling, tinning and wave soldering.

It is to be appreciated that embodiments of the compositions and methods discussed herein are not limited in application to the details of construction and the arrangement set forth herein. The compositions and methods are capable of implementation in other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiment.

Also, the phraseology and terminology used herein is for the purpose of description and should not be regarded as limiting. The use herein of "including," "comprising," "having," "containing," "involving," and variations thereof is meant to encompass the items listed thereafter and equivalents thereof as well as additional items.

Having described above several aspects of at least one embodiment, it is to be appreciated various alterations, modifications, and improvements will readily occur to those skilled in the art. Such alterations, modifications, and improvements are intended to be part of this disclosure and are intended to be within the scope of the disclosure. Accordingly, the foregoing description and drawings are by way of example only.

In addition to the claimed embodiments in the appended claims, the following is a list of additional embodiments which may serve as the basis for additional claims the application, or in subsequent divisional applications.

### Embodiment 1

A lead-free, silver-free solder alloy comprising: 0.001 to 0.800 % by weight copper; 0.080 to 0.120 % by weight bismuth; 0.030 to 0.050 % by weight nickel; 0.008 to 0.012 % by weight phosphorus; and balance tin, together with unavoidable impurities.

### Embodiment 2

The solder alloy of embodiment 1, further comprising one or more of the following: 0.10 % by weight maximum silver; 0.05 % by weight maximum lead; 0.05 % by weight maximum antimony; 0.030 % by weight maximum arsenic; 0.001 % by weight maximum cadmium; 0.001 % maximum zinc; 0.020 % by weight maximum iron; 0.001 % by weight maximum aluminum; 0.050 % by weight maximum indium; 0.050 % by weight maximum gold; 0.10 % by weight maximum chromium; and 0.10 % by weight maximum mercury.

### Embodiment 3

The solder alloy of embodiment 1, further comprising 0.05 % by weight maximum lead.

### Embodiment 4

The solder alloy of embodiment 1, further comprising 0.05 % by weight maximum antimony.

### Embodiment 5

The solder alloy of embodiment 1, further comprising 0.030 % by weight maximum arsenic.

### Embodiment 6

The solder alloy of embodiment 1, further comprising 0.001 % by weight maximum cadmium.

### Embodiment 7

The solder alloy of embodiment 1, further comprising 0.001 % maximum zinc.

### Embodiment 8

The solder alloy of embodiment 1, further comprising 0.020 % by weight maximum iron.

### Embodiment 9

The solder alloy of embodiment 1, further comprising 0.001 % by weight maximum aluminum.

### Embodiment 10

The solder alloy of embodiment 1, further comprising 0.050 % by weight maximum indium.

### Embodiment 11

The solder alloy of embodiment 1, further comprising 0.050 % by weight maximum gold.

### Embodiment 12

The solder alloy of embodiment 1, further comprising 0.10 % by weight maximum chromium.

### Embodiment 13

The solder alloy of embodiment 1, further comprising 0.10 % by weight maximum mercury.

### Embodiment 14

The solder alloy of embodiment 1, further comprising 0.10 % by weight maximum silver.

### Embodiment 15

The solder alloy of embodiment 1, wherein the solder alloy is in the form of one of a bar, a stick, a solid or flux cored wire, a foil or strip, or a powder or paste, or solder spheres for use in ball grid arrays or chip scale packages, or other pre-formed solder pieces.

### Embodiment 16

The solder alloy of embodiment 1, wherein copper is 0.600 to 0.800 % by weight of the solder alloy.

### Embodiment 17

A solder joint formed by the solder alloy set forth in embodiment 1.

### Embodiment 18

A method of forming a solder joint with the solder alloy set forth in embodiment 1.

### Embodiment 19

A lead-free, silver-free solder alloy consisting of: 0.001 to 0.800 % by weight copper; 0.001 to 0.050 % by weight nickel; 0.001 to 0.012 % by weight phosphorus; 0.001 to 0.008 % by weight gallium; and balance tin, together with unavoidable impurities.

### Embodiment 20

The solder alloy of embodiment 19, wherein copper is 0.600 to 0.800 % by weight of the solder alloy.

## Claims

1. A lead-free, silver-free solder alloy consisting essentially of:
0.001 to 0.800 % by weight copper;
0.001 to 0.050 % by weight nickel;
0.001 to 0.012 % by weight phosphorus or germanium;
0.001 to 0.008 % by weight gallium; and
balance tin, together with unavoidable impurities.

2. The solder alloy of claim 1, further consisting essentially of one or more of the following:
0.10 % by weight maximum silver;
0.07 % by weight maximum lead;
0.10 % by weight maximum antimony;
0.030 % by weight maximum arsenic;
0.002 % by weight maximum cadmium;
0.001 % maximum zinc;
0.020 % by weight maximum iron;
0.001 % by weight maximum aluminum;
0.050 % by weight maximum indium; and
0.050 % by weight maximum gold.

3. The solder alloy of claim 1, wherein copper is 0.600 to 0.800 % by weight of the solder alloy.

4. The solder alloy of claim 1, wherein phosphorus is 0.001 to 0.002 % by weight of the solder alloy.

5. The solder alloy of claim 1, wherein phosphorus is 0.002 to 0.012 % by weight of the solder alloy.

6. The solder alloy of claim 1, wherein gallium is 0.005 to 0.008 % by weight of the solder alloy.

7. The solder alloy of claim 1, wherein tin is at least 90 % by weight of the solder alloy.

8. The solder alloy of claim 1, wherein tin is 94 to 99.6 % by weight of the solder alloy.

9. The solder alloy of claim 1, wherein tin is 95 to 99 % by weight of the solder alloy.

10. The solder alloy of claim 1, wherein tin is 97 to 99 % by weight of the solder alloy.

11. The solder alloy of claim 1, consisting essentially of:
0.60 to 0.80 % by weight copper;
0.03 to 0.05 % by weight nickel;
0.002 to 0.004 % by weight phosphorus;
0.005 to 0.008 % by weight gallium;
0.10 % maximum by weight silver;
0.10 % maximum by weight bismuth;
0.05 % maximum by weight lead;
0.050 % maximum by weight antimony;
0.030 % maximum by weight arsenic;
0.001 % maximum by weight cadmium;
0.001 % maximum by weight zinc;
0.020 % maximum by weight iron;
0.001 % maximum by weight aluminum;
0.050 % maximum by weight indium;
0.050 % maximum by weight gold;
0.10 % maximum by weight chromium;
0.10 % maximum by weight mercury; and
balance tin.

12. The solder alloy of claim 1, wherein the solder alloy is in the form of one of a bar, a stick, a solid or flux cored wire, a foil or strip, or a powder or paste, or solder spheres for use in ball grid arrays or chip scale packages, or other pre-formed solder pieces.

13. A solder joint formed by the solder alloy set forth in claim 1.

14. A method of forming a solder joint with the solder alloy set forth in claim 1.

15. A use of the solder of claim 1 in a molten solder bath for soldering together two or more substrates or for coating a substrate.
